(19) **Europäisches Patentamt / European Patent Office / Office européen des brevets**

(11) **EP 4 632 920 A1**

(12) # EUROPEAN PATENT APPLICATION
published in accordance with Art. 153(4) EPC

(43) Date of publication:
**15.10.2025 Bulletin 2025/42**

(21) Application number: **24886210.4**

(22) Date of filing: **29.10.2024**

(51) International Patent Classification (IPC):
$H01M\ 50/35\ ^{(2021.01)}$    $H01M\ 50/392\ ^{(2021.01)}$
$H01M\ 50/178\ ^{(2021.01)}$    $H01M\ 50/141\ ^{(2021.01)}$
$B32B\ 27/08\ ^{(2006.01)}$    $B32B\ 27/32\ ^{(2006.01)}$
$B32B\ 27/28\ ^{(2006.01)}$    $H01M\ 50/186\ ^{(2021.01)}$

(52) Cooperative Patent Classification (CPC):
**B32B 27/08; B32B 27/28; B32B 27/32;
H01M 50/141; H01M 50/178; H01M 50/183;
H01M 50/186; H01M 50/35; H01M 50/367;
H01M 50/392; H01M 50/534;** Y02E 60/10

(86) International application number:
**PCT/KR2024/016675**

(87) International publication number:
**WO 2025/095537 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.10.2023 KR 20230147268**

(71) Applicant: **LG Energy Solution, Ltd.
Seoul 07335 (KR)**

(72) Inventors:
• **HWANG, Ji Young
Daejeon 34122 (KR)**
• **PARK, Eun Suk
Daejeon 34122 (KR)**
• **LEE, Yu Jin
Daejeon 34122 (KR)**
• **JU, Hye Yeong
Daejeon 34122 (KR)**
• **KIM, Sang Hun
Daejeon 34122 (KR)**
• **YU, Hyung Kyun
Daejeon 34122 (KR)**

(74) Representative: **Plasseraud IP
104 Rue de Richelieu
CS92104
75080 Paris Cedex 02 (FR)**

(54) **POUCH-TYPE SECONDARY BATTERY**

(57) A pouch type secondary battery according to the present invention includes: an electrode assembly; a pouch type case that includes an accommodation portion accommodating the electrode assembly, and a terrace portion which is provided along a periphery of the accommodation portion and has a sealing portion in which a portion of a width of the sealing portion is sealed; an electrode lead which is connected to the electrode assembly and protrudes to an outside of the pouch type case via the terrace portion; a lead film disposed between the electrode lead and the pouch type case; and a gas guiding film disposed between the electrode lead and the lead film. Also, the gas guiding film is characterized in that it includes a permeation portion formed on an outside of the sealing portion, and one or more gas channels formed such that the permeation portion and an inside of the pouch type case are connected to each other via the sealing portion, and has a gas discharge coefficient ($C_R$) of 10 to 25.

**(Cont. next page)**

EP 4 632 920 A1

$W_L$

180

$S_A$

190

151

230
200
240

$W_P$

FIG.7

**Description**

## TECHNICAL FIELD

The present invention relates to a pouch type secondary battery, and more particularly, to a pouch type secondary battery including a gas guiding film.

## BACKGROUND ART

Secondary batteries have been used in various fields, including not only small products such as digital cameras, P-DVDs, MP3Ps, mobile phones, PDAs, portable game devices, power tools, and E-bikes, but also large products requiring high output, such as electric vehicles and hybrid vehicles, and a power storage device and a power storage device for backup which store surplus generated power or renewable energy. Types of the secondary batteries include a nickel cadmium battery, a nickel hydride battery, a lithium ion battery, and a lithium ion polymer battery.

The secondary battery may be prepared by accommodating an electrode assembly, in which a positive electrode, a negative electrode, and a separator disposed therebetween are alternately stacked, in a battery case, injecting an electrolyte, and then sealing the battery case. The secondary battery is classified into a pouch type, a can type, and the like, according to a material of a case for accommodating the electrode assembly. After a cup portion is formed by press working of a flexible pouch film laminate, the pouch type battery among them may be prepared by accommodating the electrode assembly in an accommodation space inside the cup portion and sealing a sealing portion.

Gas may be generated in a pouch of the pouch type secondary battery during high-temperature operation, overcharge, or occurrence of a short circuit. In a case in which gas pressure in the pouch increases, there is a problem in that explosion or ignition occurs while the pouch is vented.

Accordingly, research is being conducted on various types of gas discharge components in order to solve the above-described problem, and there is a continuously increasing need for a gas discharge component in which gas discharge and problems of moisture penetration from the outside and electrolyte leakage are simultaneously considered, a gas discharge component operating at a low pressure while withstanding a high internal pressure, and furthermore, a gas discharge component with excellent durability.

## DISCLOSURE OF THE INVENTION

### TECHNICAL PROBLEM

An aspect of the present invention provides a pouch type secondary battery which may operate at a low internal pressure and has a fast gas discharge rate while minimizing moisture penetration and electrolyte solution leakage through design of a gas guiding film.

### TECHNICAL SOLUTION

According to an embodiment, provided is a pouch type secondary battery including: an electrode assembly; a pouch type case that includes an accommodation portion accommodating the electrode assembly, and a terrace portion which is provided along a periphery of the accommodation portion and has a sealing portion in which a portion of a width of the sealing portion is sealed; an electrode lead which is connected to the electrode assembly and protrudes to an outside of the pouch type case via the terrace portion; a lead film disposed between the electrode lead and the pouch type case; and a gas guiding film disposed between the electrode lead and the lead film, wherein the gas guiding film includes a permeation portion formed on an outside of the sealing portion, and one or more gas channel portions formed such that the permeation portion and an inside of the pouch type case are connected to each other via the sealing portion, and a gas discharge coefficient ($C_R$) represented by Equation 1 is in a range of 10 to 25.

$$[\text{Equation 1}]$$

$$CR = 2(S_A/W_L) + W_P$$

In Equation 1, $W_P$ is a total sum (mm) of widths of the one or more gas channel portions, $W_L$ is a width (mm) of the electrode lead, and $S_A$ is an area ($mm^2$) of the permeation portion.

[2] The pouch type secondary battery of [1] above, wherein, in a case in which an internal pressure of the pouch type case is increased, an interface between the gas guiding film and the lead film may be opened to form a gas discharge path along the gas channel.

[3] The pouch type secondary battery of [1] and/or [2] above, wherein a ratio ($S_A/W_L$) of the area ($S_A$) of the permeation portion to the width ($W_L$) of the electrode lead may be in a range of 1.7 mm to 7.5 mm.

[4] The pouch type secondary battery of at least one of [1] to [3] above, wherein the total sum ($W_P$) of the widths of the gas channels may be in a range of 6 mm to 20 mm.

[5] The pouch type secondary battery of at least one of [1] to [4] above, wherein the gas guiding film may have a structure in which an adhesive resin layer and a permeable resin layer are stacked from an upper surface of the electrode lead.

[6] The pouch type secondary battery of [5] above, wherein the adhesive resin layer may include at least one selected from the group consisting of acid modified polypropylene (PPa) and acid modified polyethylene (Pea).

[7] The pouch type secondary battery of [5] and/or [6] above, wherein the permeable resin layer may include at least one selected from the group consisting of polyimide (PI) and polytetrafluoroethylene (PTFE).

[8] The pouch type secondary battery of at least one of [5] to [7] above, wherein a ratio (D1/D2) of a thickness (D1) of the adhesive resin layer to a thickness (D2) of the permeable resin layer may be in a range of 0.4 to 2.0.

[9] The pouch type secondary battery of at least one of [5] to [8] above, wherein the adhesive resin layer may have a thickness of 5 $\mu$m to 130 $\mu$m.

[10] The pouch type secondary battery of at least one of [5] to [9] above, wherein the permeable resin layer may have a thickness of 40 $\mu$m to 100 $\mu$m.

[11] The pouch type secondary battery of at least one of [5] to [10] above, wherein one end of the adhesive resin layer of the gas guiding film, which protrudes in an outer side direction of the pouch type case, may protrude further than one end of the permeable resin layer of the gas guiding film which protrudes in the outer side direction of the pouch type case.

[12] The pouch type secondary battery of at least one of [1] to [11] above, wherein the number of the gas channels may be two or more.

[13] The pouch type secondary battery of at least one of [1] to [12] above, wherein one end of the lead film, which protrudes in the outer side direction of the pouch type case, may be disposed in direct contact with the electrode lead by protruding further than one end of the gas guiding film which protrudes in the outer side direction of the pouch type case.

[14] The pouch type secondary battery of at least one of [1] to [13] above, wherein one surface of the electrode lead may be coated with at least one selected from the group consisting of chromium (Cr), nickel (Ni), aluminum oxide ($Al_2O_3$), a zirconium (Zr)-based anhydrous oxide salt, and a titanium (Ti)-based anhydrous oxide salt.

**ADVANTAGEOUS EFFECTS**

A pouch type secondary battery according to the present invention may have an advantage in that a gas discharge rate is fast while an operating pressure of a gas guiding film at which gas discharge begins is low through dimensional design of a gas channel portion and a permeation portion which constitute the gas guiding film. Also, with respect to problems of moisture penetration and electrolyte solution leakage through the gas guiding film, there is a strong tendency that they are dependent on a material, but since they may be minimized through the dimensional design, it may greatly contribute to overcoming limitations of the material.

Thus, the pouch type secondary battery of the present invention may have excellent durability and safety because it may minimize the leakage of the electrolyte solution and the penetration of the moisture while discharging gas to the outside as soon as the gas is generated.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is an exploded assembly view of a pouch type secondary battery according to the present invention.

FIG. 2 is a cross-sectional view of the sealed pouch type secondary battery.

FIG. 3 is an example of a cross-sectional view of a pouch type secondary battery before a pouch type case is lifted.

FIG. 4 is an example of a cross-sectional view of the pouch type secondary battery when the pouch type case is lifted.

FIG. 5 is another example of a cross-sectional view of a pouch type secondary battery before a pouch type case is lifted.

FIG. 6 is another example of a cross-sectional view of a pouch type secondary battery before a pouch type case is lifted.

FIG. 7 is a top perspective view of a gas guiding film having one gas channel portion according to an embodiment of the present invention.

FIG. 8 is a top perspective view of a gas guiding film having two gas channel portions according to an embodiment of the present invention.

## MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

A pouch type secondary battery described in this specification includes at least one of technical configurations described below, and may include any combination between technically possible configurations among the technical configurations below.

A pouch type secondary battery according to the present invention includes: an electrode assembly; a pouch type case that includes an accommodation portion accommodating the electrode assembly, and a terrace portion which is provided along a periphery of the accommodation portion and has a sealing portion in which a portion of a width of the sealing portion is sealed; an electrode lead which is connected to the electrode assembly and protrudes to an outside of the pouch type case via the terrace portion; a lead film disposed between the electrode lead and the pouch type case; and a gas guiding film disposed between the electrode lead and the lead film, wherein the gas guiding film includes a permeation portion formed on an outside of the sealing portion, and one or more gas channel portions formed such that the permeation portion and an inside of the pouch type case are connected to each other via the sealing portion, and the pouch type secondary battery has a gas discharge coefficient ($C_R$) represented by Equation 1 below of 10 to 25.

$$[\text{Equation 1}]$$

$$CR = 2(S_A/W_L) + W_P$$

In Equation 1, $W_P$ is a total sum (mm) of widths of the one or more gas channel portions, $W_L$ is a width (mm) of the electrode lead, and $S_A$ is an area (mm²) of the permeation portion.

In general, gas discharge performance of a gas guiding film is determined by properties of a material constituting the gas guiding film, wherein moisture penetration prevention performance and electrolyte solution leakage prevention performance may be determined depending on the properties of the material, and gas permeability is also a property that varies depending on the material, wherein the material constituting the gas guiding film plays an important role.

However, even if the material plays an important role, there are clearly areas that are not determined by the material, and, based on observations in which there are factors that may improve the gas discharge performance regardless of the material, the present invention aims at defining a gas guiding film which may improve the moisture penetration and electrolyte solution leakage prevention performances while also having excellent gas discharge performance by designing an area of a gas permeation portion of the gas guiding film and a width of a gas channel portion that is formed from the inside of a pouch type case to the gas permeation portion.

First, each component of the pouch type secondary battery of the present invention will be described in more detail with reference to the drawings.

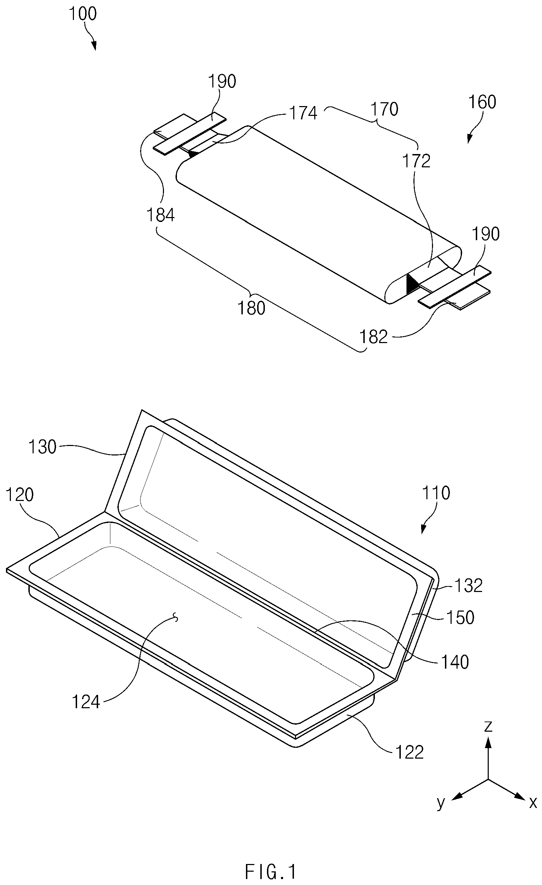

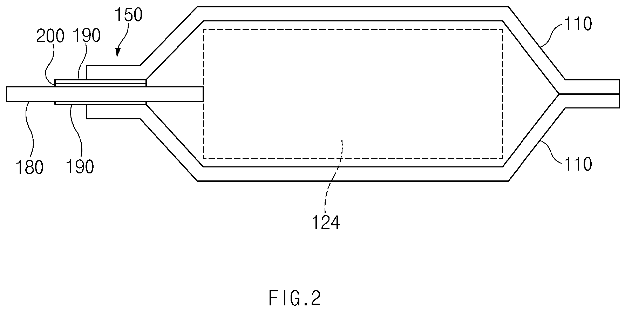

FIG. 1 is an exploded assembly view of a pouch type secondary battery 100 according to the present invention, and FIG. 2 is a cross-sectional view of the sealed pouch type secondary battery 100. In FIG. 2, some of components of the pouch type secondary battery 100 are omitted for ease of understanding. As illustrated in FIGS. 1 and 2, the pouch type secondary battery 100 of the present invention includes a pouch type case 110, an electrode assembly 160, an electrode lead 180, a lead film 190, and a gas guiding film 200.

### (1) Pouch Type Case

According to an embodiment of the present invention, the pouch type case 110 may accommodate the electrode assembly 160 inside. The pouch type case 110 may be prepared by forming a pouch film laminate. In this case, the pouch film laminate may include a base material layer, a gas barrier layer, and a sealant layer. In the pouch film laminate, the base material layer, the gas barrier layer, and the sealant layer may be sequentially laminated.

The base material layer is formed as an outermost layer of the pouch film laminate to protect a secondary battery from friction and collision with the outside. The base material layer is formed of a polymer such that it may electrically insulate the electrode assembly from the outside.

The base material layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers. Preferably, the base material layer may be formed of polyethylene terephthalate (PET), Nylon, or a combination thereof, which has wear resistance and heat resistance.

The base material layer may have a single-layer structure formed of any one material. Alternatively, the base material layer may have a composite layer structure which is formed by layering two or more materials, respectively.

The base material layer may have a thickness of 5 μm to 50 μm, particularly 7 μm to 40 μm, and more particularly 25 μm to 38 μm. In a case in which the thickness of the base material layer satisfies the above range, since external insulation is excellent and an entire pouch is not thick, energy density to volume of the secondary battery may be excellent.

The gas barrier layer is laminated between the base material layer and the sealant layer to secure mechanical strength of the pouch, block incoming and outgoing of gas or moisture from the outside of the secondary battery, and prevent leakage of an electrolyte from the inside of the pouch type case.

The gas barrier layer may be formed of metal, and may specifically be formed of an aluminum alloy thin film. In a case in which the gas barrier layer is formed by using the aluminum alloy thin film, the gas barrier layer is light-weighted while securing more than a predetermined level of mechanical strength, may compensate for electrochemical properties by the electrode assembly and the electrolyte, and may secure a heat dissipation property. A metallic element other than aluminum (Al), for example, at least one selected from the group consisting of iron (Fe), copper (Cu), chromium (Cr), manganese (Mn), nickel (Ni), magnesium (Mg), silicon (Si), and zinc (Zn) may be included in the aluminum alloy thin film.

The gas barrier layer may have a thickness of 40 μm to 100 μm, particularly 50 μm to 90 μm, and more particularly 55 μm to 85 μm. In a case in which the thickness of the gas barrier layer satisfies the above range, gas barrier performance and formability when forming a cup portion are excellent.

The sealant layer is for completely sealing the inside of the pouch type case by being thermally bonded to each other at a sealing portion when the pouch type case accommodating the electrode assembly inside is sealed. For this purpose, the sealant layer may be formed of a material having excellent thermal adhesive strength.

The sealant layer may be formed of a material having insulation properties, corrosion resistance, and sealing properties. Specifically, since the sealant layer is in direct contact with the electrode assembly and/or the electrolyte inside the pouch type case, it may be formed of a material having insulation properties and corrosion resistance. Also, since the sealant layer completely seals the inside of the pouch type case to block material movement between the inside/the outside, it may be formed of a material having high sealing properties (e.g., excellent thermal adhesive strength). To ensure such insulation properties, corrosion resistance, and sealing properties, the sealant layer may be formed of a polymer material.

The sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, Nylon, polyester, polyparaphenylene benzobisoxazole, polyarylate, Teflon, and glass fibers, and may preferably be formed of a polyolefin-based resin such as polypropylene (PP) and/or polyethylene (PE). In this case, the polypropylene may be composed of cast polypropylene (CPP), acid modified polypropylene (PPa), a polypropylene-ethylene copolymer, and/or a polypropylene-butylene-ethylene terpolymer.

The sealant layer may have a thickness of 30 $\mu$m to 130 $\mu$m, particularly 50 $\mu$m to 120 $\mu$m, and more particularly 70 $\mu$m to 100 $\mu$m. In a case in which the thickness of the sealant layer satisfies the above range, there is an effect of securing formability of the pouch film laminate while securing sealing strength of the sealing portion.

The pouch film laminate may be drawn and stretched by a punch or the like to prepare the pouch type case 110. As a result, the pouch type case 110 may include a cup portion 122 and an accommodation portion 124. The accommodation portion 124 is a place to accommodate the electrode assembly, wherein it may mean an accommodation space which is formed in a pocket shape inside the cup portion 122 as the cup portion 122 is formed.

According to an embodiment of the present invention, the pouch type case 110 may include a first case 120 and a second case 130 as illustrated in FIG. 1. The first case 120 includes the accommodation portion 124 capable of accommodating the electrode assembly 160, and the second case 130 may cover the accommodation portion 124 from the top so that the electrode assembly 160 is not separated to the outside of the battery case 110. The first case 120 and the second case 130 may be prepared by connecting one sides thereof to each other as illustrated in FIG. 1, but the present invention is not limited thereto and the first case 120 and the second case 130 may be prepared in various ways, for example, the first case 120 and the second case 130 are separated from each other and prepared separately.

According to another embodiment of the present invention, in a case in which the cup portion is formed on the pouch film laminate, the two symmetrical cup portions 122 and 132 may be drawn adjacent to each other on one pouch film laminate. In this case, as illustrated in FIG. 1, the cup portions 122 and 132 may be formed in the first case 120 and the second case 130, respectively. After the electrode assembly 160 is accommodated in the accommodation portion 124 provided in the cup portion 122 of the first case 120, a bridge portion 140 formed between the two cup portions 122 and 132 may be folded so that the two cup portions 122 and 132 face each other. In this case, the cup portion 132 of the second case 130 may accommodate the electrode assembly 160 from above. Thus, since the two cup portions 122 and 132 accommodate the one electrode assembly 160, the electrode assembly 160 having a thickness greater than that when the cup portion 122 is one may be accommodated. Also, since one edge of the secondary battery 100 is formed by folding the pouch type case 110, the number of edges to be sealed may be reduced when a sealing process is performed later. Accordingly, a process speed of the pouch type secondary battery 100 may be improved, and the number of sealing processes may be reduced.

The pouch type case 110 may be sealed in a state in which it accommodates the electrode assembly 160 so that a portion of the electrode lead 180 to be described later, that is, a terminal portion, is exposed. Specifically, when the electrode lead 180 is connected to an electrode tab 170 of the electrode assembly 160 and the lead film 190 is formed in the portion of the electrode lead 180, the electrode assembly 160 is accommodated in the accommodation portion 124 provided in the cup portion 122 of the first case 120, and the second case 130 may cover the accommodation portion 124 from the top. Subsequently, an electrolyte is injected in the accommodation portion 124 and a portion of a terrace portion 150 formed on edges along peripheries of the first case 120 and the second case 130 may be sealed to form a sealing portion (not shown).

The sealing portion may act to seal the accommodation portion 124. Specifically, the sealing portion may seal the accommodation portion 124 while being formed on the terrace portion 150 which is formed on the edge along a periphery of the accommodation portion 124.

Temperature at which the sealing portion is sealed may be in a range of 180°C to 250°C, particularly 200°C to 250°C, and more particularly 210°C to 240°C. In a case in which the sealing temperature satisfies the above numerical range, the pouch type case 110 may secure sufficient sealing strength by thermal bonding.

## (2) Electrode Assembly

According to an embodiment of the present invention, the electrode assembly 160 may be inserted into the pouch type case 110 and may be sealed by the pouch type case 110 after the injection of the electrolyte.

The electrode assembly 160 may be formed by sequentially stacking a positive electrode, a separator, and a negative electrode. Specifically, the electrode assembly 160 may include two types of electrodes, such as the positive electrode and the negative electrode, and the separator disposed between the electrodes to insulate the electrodes from each other.

The positive electrode and the negative electrode may be structures in which active material slurries are applied to electrode current collectors in the form of a metal foil or metal mesh including aluminum and copper, respectively. The slurry may be typically formed by stirring a granular active material, an auxiliary conductor, a binder, and a conductive agent in a state in which a solvent is added. The solvent may be removed in a subsequent process.

A slurry, in which an electrode active material, a binder, and/or a conductive agent are mixed, is applied to a positive electrode collector and a negative electrode collector to prepare a positive electrode and a negative electrode, and the electrode assembly 160 may be prepared in a predetermined shape by stacking the positive electrode and the negative electrode on both sides of the separator. Types of the electrode assembly 160 may include a stacked type, a jelly-roll-type, and a stack and folding type, but are not limited thereto.

The electrode assembly 160 may include the electrode tab 170.

The electrode tab 170 is connected to each of the positive electrode and the negative electrode of the electrode assembly 160 and protrudes from the electrode assembly 160 to the outside so that it may be a path through which electrons may move between the inside and the outside of the electrode assembly 160. The electrode current collector included in the electrode assembly 160 may be composed of a portion to which the electrode active material is applied and an end portion to which the electrode active material is not applied, that is, an uncoated portion. The electrode tab 170 may be formed by cutting the uncoated portion or may be formed by connecting a separate conductive member to the uncoated portion by ultrasonic welding or the like. As illustrated in FIG. 1, the electrode tabs 170 may protrude in different directions of the electrode assembly 160, respectively, but are not limited thereto and may be formed to protrude in various directions, for example, the electrode tabs 170 protrude side by side from one side of the electrode assembly 160 in the same direction.

### (3) Electrode Lead

According to an embodiment of the present invention, the electrode lead 180 may supply electricity to the outside of the secondary battery 100. The electrode lead 180 may be connected to the electrode tab 170 of the electrode assembly 160 by spot welding or the like.

The electrode lead 180 is connected to the electrode assembly 160 and may protrude to the outside of the pouch type case 110 via the sealing portion 150. Specifically, one end of the electrode lead 180 is connected to the electrode assembly 160, especially the electrode tab 170, and the other end of the electrode lead 180 may protrude to the outside of the pouch type case 110 via the terrace portion 150.

The electrode lead 180 may include a positive electrode lead 182, which has one end connected to a positive electrode tab 172 and extends in a protruding direction of the positive electrode tab 172, and a negative electrode lead 184 which has one end connected to a negative electrode tab 174 and extends in a protruding direction of the negative electrode tab 174. The other ends of both of the positive electrode lead 182 and the negative electrode lead 184 may protrude to the outside of the battery case 110. Accordingly, the electricity generated inside the electrode assembly 160 may be supplied to the outside. Also, since the positive electrode tab 172 and the negative electrode tab 174 are formed to respectively protrude in various directions, the positive electrode lead 182 and the negative electrode lead 184 may also respectively extend in various directions. Materials of the positive electrode lead 182 and the negative electrode lead 184 may be different from each other. That is, the positive electrode lead 182 may be formed of an aluminum (Al) material that is the same as the positive electrode collector, and the negative electrode lead 184 may be formed of a copper (Cu) material or nickel (Ni)-coated copper material that is the same as the negative electrode collector. Since a portion of the electrode lead 180 protruding to the outside of the battery case 110 becomes a terminal portion, it may be electrically connected to an external terminal.

One surface of the electrode lead 180, which is in direct contact with the lead film 190 and/or the gas guiding film 200, may be coated with at least one selected from the group consisting of chromium (Cr), nickel (Ni), aluminum oxide ($Al_2O_3$), a zirconium (Zr)-based anhydrous oxide salt, and a titanium (Ti)-based anhydrous oxide salt. In this case, corrosion resistance against the electrolyte solution and adhesiveness to the lead film 190 and/or the gas guiding film 200 may be secured.

### (4) Lead Film

According to an embodiment of the present invention, the lead film 190 prevents flow of the electricity generated from the electrode assembly 160 to the battery case 110 through the electrode lead 180, and may maintain sealing of the battery case 110. For this purpose, the lead film 190 may be formed of an insulator having non-conductivity which does not conduct electricity well. In general, as the lead film 190, an insulating tape or film, which is easy to be attached to the electrode lead 180 and/or the gas guiding film 200 and is relatively thin, is widely used, but the present invention is not limited thereto, and any member capable of insulating the electrode lead 180 may be used.

The lead film 190 may be disposed to surround outer circumferential surfaces of the electrode lead 180 and the gas guiding film 200. Specifically, the electrode lead 180 and the gas guiding film 200 are in contact with each other at one side, and, in this case, at least a portion of the electrode lead 180 and the gas guiding film 200 may be surrounded by the lead film 190. The lead film 190 may be limitedly located at the sealing portion 150 to which the first case 120 and the second case 130 of the pouch type case 110 are thermally fused, and may adhere the electrode lead 180 and the gas guiding film 200 to the battery case 110.

The lead film 190 may be disposed between the electrode lead 180 and/or gas guiding film 200 and the pouch type case 110. For example, as illustrated in FIG. 2, the lower case 110, the lead film 190, the electrode lead 180, the gas guiding film 200, the lead film 190, and the upper case 110 may be disposed in a sequentially stacked state in a region of the sealing portion 150.

The lead film 190 may include one or more layers. Specifically, the lead film 190 may include a metal adhesive layer, a core layer, and a pouch adhesive layer which are sequentially stacked.

The metal adhesive layer is in direct contact with the electrode lead 180, and may be used to adhere the lead film 190 to the electrode lead 180. The metal adhesive layer may include any material that easily adheres to the electrode lead 180. Specifically, the metal adhesive layer may include an acid-modified polyolefin. For example, the metal adhesive layer may include at least one of acid modified polypropylene (PPa), acid modified polyethylene (PEa), and plasma-treated polypropylene (PP), but is not limited thereto. Its thickness may be in a range of 50 $\mu$m to 80 $\mu$m, particularly 50 $\mu$m to 75 $\mu$m, and more particularly 60 $\mu$m to 75 $\mu$m. In a case in which the thickness of the metal adhesive layer satisfies the above numerical range, there is an effect of preventing pinholes and leakage at an edge portion when the electrode lead and the lead film are fused together.

The core layer may be a layer located at a center of the lead film 190. The core layer may include an additive such as polypropylene, a polyolefin elastomer (POE), and/or a colorant, but is not limited thereto. Among them, the polymer included in the core layer may be a homopolymer. In a case in which the homopolymer is included in the core layer, since a melting point of the core layer may be controlled within the above numerical range and deformation due to heat may be minimized, it is advantageous in terms of securing insulation properties. A thickness of the core layer may be in a range of 40 $\mu$m to 70 $\mu$m, particularly 50 $\mu$m to 70 $\mu$m, and more particularly 60 $\mu$m to 70 $\mu$m. In a case in which the thickness of the core layer satisfies the above numerical range, it has an effect of robust design in terms of securing the insulation properties by preventing the deformation due to heat applied during fusion and sealing.

The pouch adhesive layer may be a layer that is in direct contact with the battery case 110, specifically, the sealant layer of the pouch film laminate. The pouch adhesive layer may include polypropylene and a polyolefin elastomer (POE), but is not limited thereto. Among them, the polymer included in the pouch adhesive layer may be a copolymer. In a case in which the copolymer is included in the pouch adhesive layer, since a melting point of the pouch adhesive layer may be controlled within the above numerical range and is similar to that of the polymer in the sealant layer of the pouch film laminate, it is advantageous in securing sealing processability. A thickness of the pouch adhesive layer may be in a range of 40 $\mu$m to 100 $\mu$m, particularly 40 $\mu$m to 80 $\mu$m, and more particularly 40 $\mu$m to 60 $\mu$m. In a case in which the thickness of the pouch adhesive layer satisfies the above numerical range, there is an effect of securing a sufficient polymer (e.g., polypropylene) remaining ratio to secure strength when sealing between the electrode lead and the pouch film laminate.

### (5) Gas Guiding Film

According to an embodiment of the present invention, the gas guiding film 200 is for discharging gas from the inside of the pouch type case 110 to the outside. As illustrated in FIG. 2, the gas guiding film 200 of the present invention may be disposed between the electrode lead 180 and the lead film 190. In this case, in a region between the electrode lead 180 and the lead film 190, the electrode lead 180 and the lead film 190 are not in direct contact with each other in a region where the gas guiding film 200 is disposed, and the electrode lead 180 and the lead film 190 may be in direct contact with each other in a region where the gas guiding film 200 is not disposed.

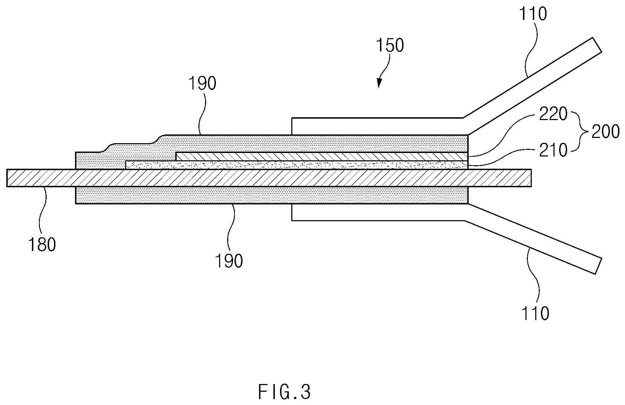

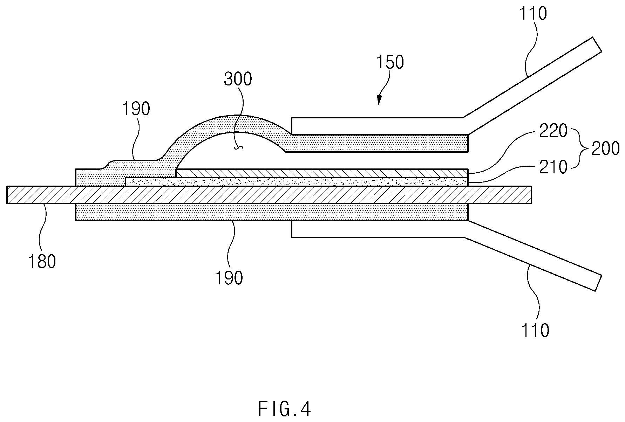

Hereinafter, the gas guiding film 200 of the present invention will be described in more detail with reference to FIGS. 3 and 4. FIG. 3 is a cross-sectional view of the pouch type secondary battery before the pouch type case is lifted, and FIG. 4 is a cross-sectional view of the pouch type secondary battery when the pouch type case is lifted.

As illustrated in FIGS. 3 and 4, an interface between the gas guiding film 200 and the lead film 190 may be maintained in a closed state without being opened in a normal operating situation or in a case where a gas generation amount is small in the inside.

However, if gas is generated for a predetermined reason in an internal battery reaction to increase an internal pressure of the pouch type case 110, the interface between the gas guiding film 200 and the lead film 190 may be opened along a gas channel portion 240 of the gas guiding film 200 to form a gas discharge path 300. The gas inside the pouch type case 110 may move to a permeation portion 230 through the gas discharge path 300 formed along the gas channel portion 240 and may then be discharged to the outside of the pouch by permeating through the lead film 190. As a result, the internal pressure of the pouch type case 110 is reduced to prevent explosion or ignition of the pouch type case 110, and thus, safety of the secondary battery may be ensured.

As illustrated in FIGS. 3 and 4, the gas guiding film 200 of the present invention includes an adhesive resin layer 210 in contact with the electrode lead 180, and a permeable resin layer 220 disposed on the adhesive resin layer 210.

The adhesive resin layer 210 is in contact with the electrode lead 180 and may be used to adhere the gas guiding film 200 to the electrode lead 180.

According to an embodiment of the present invention, as in FIG. 3 or 4, the adhesive resin layer 210 of the gas guiding film 200 may be formed longer in an outer side direction of the pouch type case 110 than the permeable resin layer 220, and one end of the lead film 190 protruding in the outer side direction of the pouch type case 110 may be disposed in direct contact with the electrode lead 180 by protruding further in the outer side direction than the adhesive resin layer 210. In a case in which the lead film 190 is formed to protrude further than one end of the gas guiding film 200 in the outer side direction of the pouch type case 110 as described above, since adhesion between the electrode lead 180 and the gas guiding film 200 and adhesion between the electrode lead 180 and the lead film 190 are strong, a reduction in durability due to an increase in internal pressure may be prevented, and, since an area of the permeation portion 230 on the permeable resin layer 220 may be easily secured, stable gas discharge may be possible.

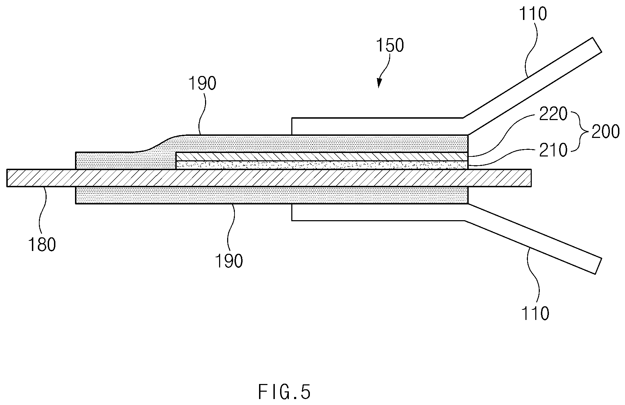

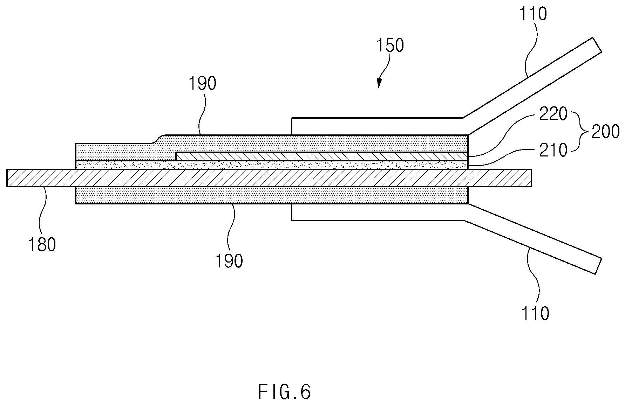

Also, as in FIG. 5, one end of the lead film 190, which protrudes in the outer side direction of the pouch type case 110, may be disposed in direct contact with the electrode lead 180 by protruding further than one end of the gas guiding film 200 which protrudes in the outer side direction of the pouch type case 110, and, as in FIG. 6, one end of the adhesive resin layer 210, which protrudes in the outer side direction of the pouch type case 110, protrudes further than one end of the permeable resin layer 220 which protrudes in the outer side direction of the pouch type case 110, but the lead film 190 may be disposed such that it is not in direct contact with the electrode lead 180, but is in contact with the adhesive resin layer 210.

In a case in which an arrangement structure of the lead film 190, the electrode lead 180, and the gas guiding film 200 is formed as in FIG. 3, FIG. 5, or FIG. 6, it may be advantageous in terms of securing the durability and securing the area of the permeation portion 230 in comparison to a case where the one end of the lead film 190 is not disposed to protrude further to the outside of the pouch type case 110 than the gas guiding film 200 but is disposed on the permeable resin layer 220 of the gas guiding film 200, but, although the lead film 190 may most preferably be disposed as in FIG. 3, there is no disadvantage in performance in the structure of FIG. 5 or FIG. 6 and there may be some differences in design and process.

The adhesive resin layer 210 may include any material that easily adheres to the electrode lead 180. Specifically, the adhesive resin layer 210 may include a modified polyolefin resin. In a case in which the modified polyolefin resin is included in the adhesive resin layer 210, since the adhesion between the gas guiding film 200 and the electrode lead 180 is improved, a problem of the gas guiding film 200 being detached from the electrode lead 180 and pushed out of the pouch or leakage of the electrolyte solution in the pouch may be prevented even if the pouch type secondary battery is stored in a high-temperature environment.

The adhesive resin layer 210 may include at least one of an acid-modified polyolefin and a silane-modified polyolefin.

The acid-modified polyolefin refers to a polyolefin resin which has been graft-modified with an acid. For example, the acid-modified polyolefin may be one in which a carboxyl group is introduced (graft-modified) by reacting an unsaturated carboxylic acid with a polyolefin resin. In this case, the unsaturated carboxylic acid may include a concept of a carboxylic anhydride, and the carboxyl group may include a concept of a carboxylic anhydride group. The unsaturated carboxylic acid to be reacted with the polyolefin resin may include at least one selected from the group consisting of maleic acid, fumaric acid, itaconic acid, citraconic acid, glutaconic acid, tetrahydrophthalic acid, aconitic acid, maleic anhydride, itaconic anhydride, glutaconic anhydride, citraconic anhydride, aconitic anhydride, norbornene dicarboxylic anhydride, and tetrahydrophthalic anhydride, but is not limited thereto. Among them, it is preferable to use maleic anhydride to improve adhesive strength between the gas guiding film 200 and the electrode lead 180. The acid-modified polyolefin may include at least one selected from the group consisting of acid modified polypropylene (PPa) and acid modified polyethylene (PEa), but is not limited thereto.

The silane-modified polyolefin refers to a polyolefin resin which has been graft-modified with an unsaturated silane compound. The silane-modified polyolefin may have a structure in which the unsaturated silane compound is graft-copolymerized onto the polyolefin resin as a main chain. The silane-modified polyolefin resin may include at least one selected from the group consisting of a silane-modified polypropylene resin and a silane-modified ethylene-vinyl acetate copolymer, but is not limited thereto.

The adhesive resin layer 210 may be subjected to a modification treatment, and the modification treatment may include an ion implantation treatment, a plasma treatment, a radiation treatment, or a heat treatment, and a treatment that changes a bonding structure of the polymer layer is preferable. One type of these modification treatments may be performed alone, but a combination of two or more types thereof may also be performed. The adhesive resin layer 210 subjected to the modification treatment may include plasma-treated polypropylene (PP), but is not limited thereto.

A thickness of the adhesive resin layer 210 may be in a range of 5 $\mu$m to 130 $\mu$m, particularly 30 $\mu$m to 120 $\mu$m, and more particularly 30 $\mu$m to 80 $\mu$m. In a case in which the thickness of the adhesive resin layer 210 satisfies the above numerical range, since the adhesive resin layer 210 is melted within a set tact time, the gas guiding film 200 and the electrode lead 180 may be easily fused.

The permeable resin layer 220 may be a layer in contact with the lead film 190.

The permeable resin layer 220 may include at least one of polytetrafluoroethylene (PTFE) and polyimide (PI), but is not limited thereto. Among them, in a case in which the polyimide is included in the permeable resin layer 220, it is desirable in that the gas discharge path 300 may be formed when the internal pressure of the case 110 increases because adhesion between the permeable resin layer 220 and the lead film 190 is reduced, and, in a case in which the polytetrafluoroethylene is included, since gas permeability is excellent and liquid blocking properties are also excellent, possibility of the electrolyte solution permeating through the gas discharge path may be reduced when the gas is not discharged and adhesion with the lead film 190 is also low so that an operating pressure may be reduced to begin gas discharge early.

A thickness of the permeable resin layer 220 may be in a range of 40 $\mu$m to 100 $\mu$m, particularly 40 $\mu$m to 90 $\mu$m, and more particularly 45 $\mu$m to 75 $\mu$m. In a case in which the thickness of the permeable resin layer 220 satisfies the above numerical range, since an interface between the permeable resin layer 220 and the lead film 190 may be lifted when the internal pressure of the case 110 increases without melting of the permeable resin layer 220 during the sealing process, the gas discharge path 300 may be formed.

A ratio (D1/D2) of the thickness (D1) of the adhesive resin layer to the thickness (D2) of the permeable resin layer may be in a range of 0.4 to 2.0, particularly 0.4 to 1.5, and more particularly 0.4 to 1.0. In a case in which the ratio (D1/D2) satisfies the above numerical range, since the interface between the permeable resin layer 220 and the lead film 190 is lifted when the internal pressure of the case 110 increases, the adhesive strength between the gas guiding film 200 and the electrode lead 180 may be improved while the gas discharge path is formed.

According to an embodiment of the present invention, the gas guiding film 200 includes the permeation portion 230 formed on the outside of the sealing portion, and at least one gas channel portion 240 formed such that the permeation portion and the inside of the pouch type case are connected to each other via the sealing portion.

Also, the gas guiding film 200 may have one or more gas channel portions 240, preferably, two or more gas channel portions, and there is no limitation on the number of the gas channel portions 240 within a range that satisfies a gas discharge coefficient to be described below, but, when considering processability and ease of preparing the gas guiding film, it may be desirable that two gas channel portions 240 are formed.

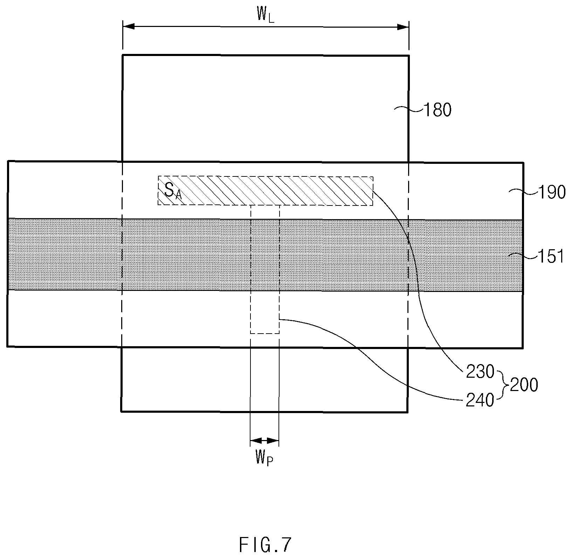

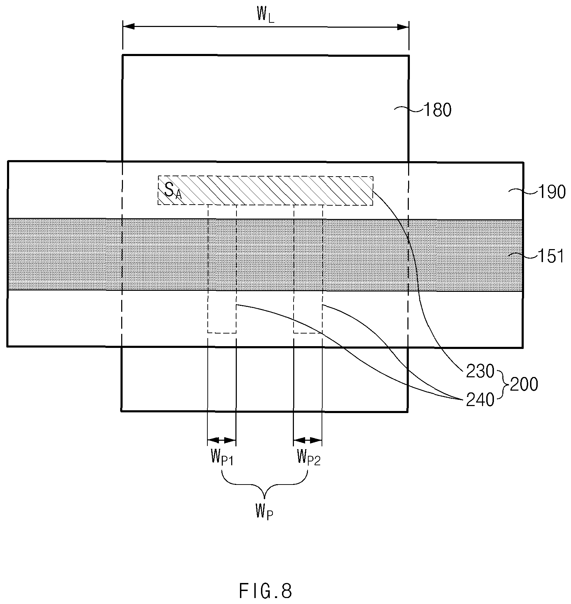

FIGS. 7 and 8 are top perspective views of the gas guiding film 200 of a portion of the electrode lead 180 and the lead film 190 according to an embodiment of the present invention, wherein the terrace portion 150 of the pouch type case 110 is omitted and the sealing portion 151, which is a sealed portion, is illustrated as a region. As described above, the gas guiding film 200 is disposed on the electrode lead 180, wherein it may be stacked in the order of the adhesive resin layer 210 and the permeable resin layer 220, the lead film 190 is disposed on the gas guiding film 200, a packaging form may be achieved while the terrace portion 150 of the pouch type case 110 is disposed on the lead film 190, and the sealing portion 151 may be formed on the terrace portion 150 through sealing.

Referring to FIG. 7, in the gas guiding film 200, the permeation portion 230 through which gas permeates is formed on the outside of the sealing portion 151, and the gas channel portion 240 connects the inside of the pouch type case 110 from the permeation portion 230 via the sealing portion 151 to form a path through which the gas is discharged. The gas guiding film 200 may have one gas channel portion 240 and may have a "$\tau$" shape as in FIG. 7, or may have two gas channel portions 240 and may have a "$\pi$" shape as in FIG. 8. In a case in which there are two or more gas channel portions 240 as in FIG. 6, a total sum of widths ($W_{P1}$, $W_{P2}$, $W_{P3}$ ... $W_{Pn}$) of a plurality of gas channel portions 240 may be $W_P$ ($W_P = W_{P1} + W_{P2} + W_{P3} + ... + W_{Pn}$) which is used as a factor of the gas discharge coefficient in Equation 1 below.

Herein, the permeation portion 230 and the gas channel portion 240 may be divided by a dividing line horizontal to a width direction of the electrode lead 180, which is formed at a point where an angle of an extension line of the gas channel portion 240 changes with respect to a longitudinal straight line of the electrode lead 180 on the outside of the sealing portion 151 in the top perspective view of the gas guiding film 200 such as in FIG. 7 or FIG. 8, wherein an inner directional region of the pouch type case 110 may be defined as the gas channel portion 240, and an outer directional region may be defined as the permeation portion 230.

The pouch type secondary battery has a gas discharge coefficient ($C_R$) defined by Equation 1 below of 10 to 25.

$$[\text{Equation 1}]$$

$$CR = 2(SA/WL) + WP$$

In Equation 1, $W_P$ is a total sum (mm) of widths of the one or more gas channel portions, $W_L$ is a width (mm) of the electrode lead, and $S_A$ is an area (mm$^2$) of the permeation portion.

Hereinafter, in describing the gas discharge coefficient, a reference numeral of each component will be omitted.

The gas discharge coefficient is a value designed by dimensions of the gas guiding film regardless of its material, wherein it is characterized by taking into account the area of the permeation portion, the width of the gas channel portion, and the width of the electrode lead as factors. A gas discharge rate is more advantageous as the area of the penetration portion and the width of the gas channel portion are larger, but, in contrast, the larger the area and the width, the higher the possibility of problems occurring in terms of preventing the moisture penetration and electrolyte solution leakage. Also, in a case in which the area of the penetration portion of the gas guiding film increases relative to the width of the electrode lead, since an increase in gas discharge performance is not large in comparison to the increase in the area of the penetration portion, design may not be appropriate when considering the possibility of the moisture penetration and electrolyte solution leakage. Furthermore, in a case in which the width of the gas channel portion increases relative to the area of the permeation portion, a complex relationship is formed in which the gas discharge rate increases and the operating pressure decreases, but the problem of the moisture penetration occurs.

In other words, the larger the area of the permeation portion of the gas guiding film, the better the performance, but the gas discharge performance and effects of preventing the moisture penetration and preventing the electrolyte solution leakage may be improved when the area of the permeation portion is increased under limitations of the width of the electrode lead and the width of the gas channel portion. Accordingly, the gas guiding film according to the embodiment of the present invention has the gas discharge coefficient as represented by Equation 1, wherein it is characterized in that it has a fast gas discharge rate, may prevent the electrolyte solution leakage and moisture penetration, and may be operated at a low internal pressure.

Preferably, the gas discharge coefficient may be 11 or more, 12 or more, 13 or more, or 14 or more, and may also be 24 or less, 23 or less, 22 or less, or 21 or less. In a case in which the gas discharge coefficient satisfies the above-described range, a gas guiding film, which may satisfy the moisture penetration prevention performance and electrolyte solution leakage prevention performance as well as the gas discharge performance, may be achieved.

More specifically, the gas guiding film according to the embodiment of the present invention may have a ratio ($S_A/W_L$) of the area ($S_A$) of the permeation portion to the width ($W_L$) of the electrode lead of 1.7 mm to 7.5 mm, preferably 1.9 mm or more, 2.2 mm or more, 2.5 mm or more, or 2.7 mm or more, and also preferably 7.0 mm or less, 6.5 mm or less, 6.0 mm or less, 5.5 mm or less, or 5.0 mm or less.

Also, the gas guiding film according to the embodiment of the present invention may have the total sum ($W_P$) of the widths of the gas channel portions of 6 mm to 20 mm. Preferably, the total sum may be 7 mm or more, 8 mm or more, 9 mm or more, or 10 mm or more, and may also be 18 mm or less, 16 mm or less, 15 mm or less, or 14 mm or less.

The gas discharge coefficient of the gas guiding film according to the embodiment of the present invention means a sum of "the ratio ($S_A/W_L$) of the area ($S_A$) of the permeation portion to the width ($W_L$) of the electrode lead" and "the total sum ($W_P$) of the widths of the gas channel portions". That is, in a case in which the area of the permeation portion to the width of the electrode lead and the total sum of the width of the gas channel portions are mutually appropriate values, that is, in a case in which the area of the permeation portion to the width of the electrode lead and the total sum of the width of the gas channel portions are maintained in appropriate ranges so as to complement each other, it may be advantageous in terms of the gas discharge performance and the prevention of the moisture penetration and electrolyte solution leakage. If both the area of the permeation portion to the width of the electrode lead and the width of the gas channel portion are excessively small, the gas discharge coefficient may be reduced to less than 10, and accordingly, an effect above a certain level may be achieved in terms of the moisture penetration or electrolyte solution leakage, but since the operating pressure is excessively high and the gas discharge rate is low, gas discharge is not smooth, and as a result, a problem due to swelling of a cell may occur.

Also, in contrast, if both the area of the permeation portion to the width of the electrode lead and the width of the gas channel portion are increased, the gas discharge coefficient may be greater than 25, and, in this case, the problems of the moisture penetration and electrolyte solution leakage become so serious that it may be difficult to use it as a gas guiding film of the cell. Furthermore, the gas guiding film may be designed by utilizing the gas discharge coefficient, for example, the width of the gas channel portion is designed to be relatively wide even when the area of the permeation portion to the width of the electrode lead is relatively small, or the area of the permeation portion to the width of the electrode lead is designed to be large even if the width of the gas channel portion is small.

Furthermore, as batteries become larger and are designed in modules and packs, there may be various variables, for example, a battery cell itself becomes larger or a plurality of small battery cells are assembled, but, with respect to the gas discharge coefficient, it may identify an appropriate design point in a three-way trade-off relationship among the gas discharge rate, a moisture penetration amount, and the operating pressure depending on a gas generation amount by reflecting a size of the battery cell through the width of the electrode lead.

Accordingly, since the pouch type secondary battery according to the embodiment of the present invention includes the gas guiding film as described above, it is advantageous in that it may discharge gas at a high rate at a low operating pressure, may contribute to an improvement in lifetime by increasing the durability, because there is no problem of corrosion caused by the generated gas or corrosion caused by the moisture penetration or electrolyte solution leakage, due to excellent performance in preventing the electrolyte solution leakage and the moisture penetration, may maintain operating performance of the cell by continuous gas discharge, and may ensure safety by also reducing risk of explosion due to swelling.

**(6) Electrolyte**

The pouch type secondary battery 100 according to the present invention may further include an electrolyte (not shown) that is injected into the pouch type battery case 110. The electrolyte is for moving lithium ions that are generated by an electrochemical reaction of the electrode during charge/discharge of the secondary battery 100, wherein it may include a non-aqueous organic electrolyte solution, as a mixture of a lithium salt and organic solvents, or a polymer using a polymer electrolyte. Furthermore, the electrolyte may include a sulfide-based, oxide-based, or polymer-based solid electrolyte, and the solid electrolyte may have flexibility to be easily deformed by an external force.

Hereinafter, the present invention will be described in detail, according to specific examples. However, the following examples are merely presented to exemplify the present invention, and the scope of the present invention is not limited thereto. It will be apparent to those skilled in the art that various modifications and alterations are possible within the scope and technical spirit of the present invention. Such modifications and alterations fall within the scope of claims included herein.

**Examples and Comparative Examples**

**Examples 1 to 7, and Comparative Examples 1 to 6**

(1) Preparation of Pouch Type Case

A polyethylene terephthalate (PET) film having a width of 266 mm, a length of 50 m, and a thickness of 12 $\mu$m and a Nylon film having a width of 266 mm, a length of 50 m, and a thickness of 25 $\mu$m were laminated on one surface of an aluminum alloy thin film having a width of 266 mm, a length of 50 m, and a thickness of 60 $\mu$m, and a polypropylene film having a width of 266 mm, a length of 50 m, and a thickness of 80 $\mu$m was laminated on the other surface thereof to prepare a pouch film laminate having a structure of polyethylene terephthalate/Nylon/aluminum alloy thin film/polypropylene film.

Herein, the polyethylene terephthalate film and the Nylon film were a base material layer, the aluminum alloy thin film was a gas barrier layer, and the polypropylene film was a sealant layer.

A pouch type case including an accommodation portion and a sealing portion was prepared by forming the pouch film laminate.

(2) Preparation of Pouch Type Secondary Battery

A negative electrode, a positive electrode, and a porous polyethylene separator were assembled by a stacking method and then laminated to prepare an electrode assembly. Thereafter, an electrode lead was bonded to the electrode assembly.

An electrolyte was prepared by dissolving $LiPF_6$ in a solvent (EC:EMC:DMC = 3:3:4 volume ratio) such that a concentration of the $LiPF_6$ was 1.0 M. The electrode assembly was accommodated in the pouch type case in a state in which a tip of the electrode lead was drawn to the outside and the electrolyte was injected.

A 40 $\mu$m thick acid-modified polypropylene film (adhesive resin layer) and a 50 $\mu$m thick polytetrafluoroethylene film (permeable resin layer) were sequentially stacked on an upper surface of the electrode lead to form a gas guiding film.

Subsequently, a 200 $\mu$m thick lead film was stacked on each of a lower surface of the electrode lead and an upper surface of the gas guiding film. The lead film includes a 75 $\mu$m thick metal adhesive layer including copolymer polypropylene and acid-modified polypropylene, a 65 $\mu$m thick core layer including homopolymer polypropylene, and a 60 $\mu$m thick pouch adhesive layer including copolymer polypropylene.

Thereafter, the sealing portion of the pouch type case was sealed for 2 seconds under conditions of a seal bar area of 200 mm $\times$ 10 mm, 220°C, and 0.27 MPa, and was then left standing at 60°C for 4 hours to prepare a pouch type secondary battery. In this case, a portion of a terrace portion where the gas guiding film was formed had a structure in which lower case/lead film/electrode lead/gas guiding film/lead film/upper case were sequentially stacked.

Pouch type secondary batteries of Examples 1 to 7 and Comparative Examples 1 to 6 were prepared by using the above-described method such that the gas guiding films had dimensions as in Table 1 below.

**[Table 1]**

| | $S_A/W_L$ (mm) | Total sum of widths of gas channel portions ($W_L$, mm) | Gas discharge coefficient ($C_R$) |
|---|---|---|---|
| Example 1 | 3.4 | 10 | 16.8 |
| Example 2 | 3.4 | 12 | 18.8 |

(continued)

|  | $S_A/W_L$ (mm) | Total sum of widths of gas channel portions ($W_L$, mm) | Gas discharge coefficient ($C_R$) |
|---|---|---|---|
| Example 3 | 3.4 | 14 | 20.8 |
| Example 4 | 3.8 | 10 | 17.6 |
| Example 5 | 2.1 | 10 | 14.2 |
| Example 6 | 2.1 | 12 | 16.2 |
| Example 7 | 2.1 | 14 | 18.2 |
| Comparative Example 1 | 3.4 | 2 | 8.8 |
| Comparative Example 2 | 3.4 | 20 | 26.8 |
| Comparative Example 3 | 8.0 | 10 | 26.0 |
| Comparative Example 4 | 0.8 | 4 | 5.6 |
| Comparative Example 5 | 0.8 | 6 | 7.6 |
| Comparative Example 6 | 0.8 | 8 | 9.6 |

**Experimental Example 1: Gas Discharge Rate Measurement**

A gas discharge rate was measured for each of the pouch type secondary batteries prepared in Examples 1 to 7 and Comparative Examples 1 to 6.

Specifically, $CO_2$ was injected into an inside of the pouch type secondary battery using a pressure-resistant device by ITS to increase an internal pressure of a pouch to 1.5 atm, an amount of gas discharged for 24 hours was then measured, and the results thereof are presented in Table 2 below.

**Experimental Example 2: Measurement of Operating Pressure of the Gas Guiding Film**

An operating pressure of the gas guiding film was measured for each of the pouch type secondary batteries prepared in Examples 1 to 7 and Comparative Examples 1 to 6.

Specifically, while increasing the internal pressure of the pouch in increments of 0.1 atm by injecting $CO_2$ into the inside of the pouch type secondary battery using a pressure-resistant device by ITS, the pouch type secondary battery was left standing for 24 hours at each pressure to measure a pressure at the time when the permeation portion of the gas guiding film was completely deformed (case where the entire permeation portion was lifted), and the results thereof are presented in Table 2 below.

**Experimental Example 3: Measurement of Moisture Penetration Amount (HF Concentration Measurement)**

A HF concentration was measured for each of the pouch type secondary batteries prepared in Examples 1 to 7 and Comparative Examples 1 to 6 in order to evaluate a moisture penetration amount.

The moisture penetration amount was evaluated by measuring a concentration of HF in the electrolyte after the pouch type secondary battery was left standing for 16 weeks under conditions of 60°C and a relative humidity of 90% and then opened, and the results thereof are presented in Table 2 below.

[Table 2]

|  | Gas discharge rate (cc/day) | Operating pressure (atm) | HF concentratio n (ppm, wt) |
|---|---|---|---|
| Example 1 | 9.9 | 0.5 | 2,000 |
| Example 2 | 12.5 | 0.5 | 3,700 |
| Example 3 | 13.8 | 0.4 | 6,500 |
| Example 4 | 17.8 | 0.8 | 8,000 |
| Example 5 | 4.6 | 1.2 | 1,000 |
| Example 6 | 5.3 | 1.1 | 1,100 |

(continued)

| | Gas discharge rate (cc/day) | Operating pressure (atm) | HF concentratio n (ppm, wt) |
|---|---|---|---|
| Example 7 | 5.8 | 1.0 | 1,200 |
| Comparative Example 1 | 2.3 | 1.8 | 800 |
| Comparative Example 2 | 15.2 | 0.3 | 11,000 |
| Comparative Example 3 | 16.8 | 0.3 | 11,000 |
| Comparative Example 4 | 3.5 | 2.5 | 170 |
| Comparative Example 5 | 3.8 | 2.2 | 360 |
| Comparative Example 6 | 4.0 | 2.0 | 450 |

Referring to Table 2, with respect to Examples 1 to 7 satisfying the gas discharge coefficient, it may be confirmed that although there are individual differences in three types of effects, namely the gas discharge rate, the operating pressure, and the moisture penetration amount, none of the effects exhibited a level that may be considered problematic. Specifically, it may be confirmed that Examples 1 to 4 had very fast gas discharge rates and a negligible level of HF concentration, and, with respect to Examples 5 to 7, since operating pressures were higher than those of Examples 1 to 4 and gas discharge rates were relatively low, but HF concentrations were almost zero, it may be confirmed that a moisture blocking effect was also excellent. However, since Comparative Examples 1 and 4 to 6 were designed such that gas discharge coefficients were excessively small, HF concentrations were low, but operating pressures were excessively high and gas discharge rates were excessively low, and thus, it was confirmed that it was difficult to prevent a phenomenon of battery expansion, and, with respect to Comparative Examples 2 and 3, it may be expected that there will be a problem in that an excessively large moisture penetration amount may significantly increase possibility of occurrence of a side reaction during battery operation. With respect to the HF concentration, an allowable range may vary depending on specifications of the battery, but, based on the specifications of the battery evaluated in the present experimental example, durability of the battery may be somewhat reduced at 8,000 ppm or less, but it may considered that no side reaction occurred to the extent that it may affect cycle characteristics, it may be understood that there was no effect on the battery at a level of 4,000 ppm or less, and, when the HF concentration was greater than 8,000 ppm, it may be evaluated that problems, such as rapid deterioration of the durability of the sealing portion or electrode lead due to corrosion of the battery and acceleration of capacity degradation due to the occurrence of the side reaction, may occur.

[Description of the Symbols]

100: Pouch Type Secondary Battery
110: Pouch Type Case
120: First Case
122: Cup Portion
124: Accommodation Portion
130: Second Case
132: Cup Portion
140: Bridge Portion
150: Terrace Portion
151: Sealing Portion
160: Electrode Assembly
170: Electrode Tab
172: Positive Electrode Tab
174: Negative Electrode Tab
180: Electrode Lead
182: Positive Electrode Lead
184: Negative Electrode Lead
190: Lead Film
200: Gas Guiding Film
210: Adhesive Resin Layer
220: Permeable Resin Layer

230:    Permeation Portion
240:    Gas Channel Portion
300:    Gas Discharge Path.

**Claims**

1.  A pouch type secondary battery comprising:

    an electrode assembly;
    a pouch type case that includes an accommodation portion accommodating the electrode assembly, and a terrace portion which is provided along a periphery of the accommodation portion and has a sealing portion in which a portion of a width of the sealing portion is sealed;
    an electrode lead which is connected to the electrode assembly and protrudes to an outside of the pouch type case via the terrace portion;
    a lead film disposed between the electrode lead and the pouch type case; and
    a gas guiding film disposed between the electrode lead and the lead film,
    wherein the gas guiding film comprises a permeation portion formed on an outside of the sealing portion, and one or more gas channels formed such that the permeation portion and an inside of the pouch type case are connected to each other via the sealing portion, and
    a gas discharge coefficient ($C_R$) represented by Equation 1 is in a range of 10 to 25:

    $$[\text{Equation 1}]$$

    $$CR = 2(S_A/W_L) + W_P$$

    wherein, in Equation 1, $W_P$ is a total sum (mm) of widths of the one or more gas channel portions, $W_L$ is a width (mm) of the electrode lead, and $S_A$ is an area ($mm^2$) of the permeation portion.

2.  The pouch type secondary battery of claim 1, wherein, in a case in which an internal pressure of the pouch type case is increased, an interface between the gas guiding film and the lead film is opened to form a gas discharge path along the gas channel.

3.  The pouch type secondary battery of claim 1, wherein the gas guiding film has a ratio ($S_A/W_L$) of the area ($S_A$) of the permeation portion to the width ($W_L$) of the electrode lead of 1.7 mm to 7.5 mm.

4.  The pouch type secondary battery of claim 1, wherein the gas guiding film has the total sum ($W_P$) of the widths of the gas channel portions of 6 mm to 20 mm.

5.  The pouch type secondary battery of claim 1, wherein the gas guiding film has a structure in which an adhesive resin layer and a permeable resin layer are stacked from an upper surface of the electrode lead.

6.  The pouch type secondary battery of claim 5, wherein the adhesive resin layer comprises at least one selected from the group consisting of acid modified polypropylene (PPa) and acid modified polyethylene (Pea).

7.  The pouch type secondary battery of claim 5, wherein the permeable resin layer comprises at least one selected from the group consisting of polyimide (PI) and polytetrafluoroethylene (PTFE).

8.  The pouch type secondary battery of claim 5, wherein a ratio (D1/D2) of a thickness (D1) of the adhesive resin layer to a thickness (D2) of the permeable resin layer is in a range of 0.4 to 2.0.

9.  The pouch type secondary battery of claim 5, wherein the adhesive resin layer has a thickness of 5 $\mu$m to 130 $\mu$m.

10.  The pouch type secondary battery of claim 5, wherein the permeable resin layer has a thickness of 40 $\mu$m to 100 $\mu$m.

11.  The pouch type secondary battery of claim 5, wherein one end of the adhesive resin layer of the gas guiding film, which protrudes in an outer side direction of the pouch type case, protrudes further than one end of the permeable resin layer of the gas guiding film which protrudes in the outer side direction of the pouch type case.

12. The pouch type secondary battery of claim 1, wherein the number of the gas channel portions is two or more.

13. The pouch type secondary battery of claim 1, wherein one end of the lead film, which protrudes in an outer side direction of the pouch type case, protrudes further than one end of the gas guiding film which protrudes in the outer side direction of the pouch type case.

14. The pouch type secondary battery of claim 1, wherein one surface of the electrode lead is coated with at least one selected from the group consisting of chromium (Cr), nickel (Ni), aluminum oxide ($Al_2O_3$), a zirconium (Zr)-based anhydrous oxide salt, and a titanium (Ti)-based anhydrous oxide salt.

FIG.1

FIG.2

FIG.3

FIG.4

FIG.5

FIG.6

FIG.7

$W_L$

180

$S_A$

190

151

230
240
200

$W_{P1}$    $W_{P2}$

$W_P$

FIG.8

## INTERNATIONAL SEARCH REPORT

| International application No. |
| --- |
| **PCT/KR2024/016675** |

**A.    CLASSIFICATION OF SUBJECT MATTER**

**H01M 50/35**(2021.01)i; **H01M 50/392**(2021.01)i; **H01M 50/178**(2021.01)i; **H01M 50/141**(2021.01)i; **B32B 27/08**(2006.01)i; **B32B 27/32**(2006.01)i; **B32B 27/28**(2006.01)i; **H01M 50/186**(2021.01)i

According to International Patent Classification (IPC) or to both national classification and IPC

**B.    FIELDS SEARCHED**

Minimum documentation searched (classification system followed by classification symbols)

H01M 50/35(2021.01); H01M 2/26(2006.01); H01M 2/30(2006.01); H01M 50/116(2021.01); H01M 50/126(2021.01); H01M 50/178(2021.01); H01M 50/186(2021.01); H01M 50/30(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 파우치(pouch), 전극 리드(electrode lead), 리드 필름(lead film), 가스 유도부(gas induction unit), 투과성(penetrability)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0121748 A (LG ENERGY SOLUTION, LTD.) 01 September 2022 (2022-09-01)<br>See paragraphs [0040]-[0067], claims 11-13 and figures 3-5d. | 1,3-4,12-14 |
| Y | | 2,5-11 |
| Y | KR 10-2023-0007955 A (LG ENERGY SOLUTION, LTD.) 13 January 2023 (2023-01-13)<br>See paragraphs [0058]-[0109] and figures 3-5 and 11-12. | 2,5-11 |
| A | KR 10-2013-0039900 A (LG CHEM, LTD.) 23 April 2013 (2013-04-23)<br>See paragraph [0026] and claims 5-6. | 1-14 |
| A | KR 10-2023-0118487 A (LG ENERGY SOLUTION, LTD.) 11 August 2023 (2023-08-11)<br>See paragraphs [0071]-[0075] and figures 6-7. | 1-14 |
| A | KR 10-2023-0007956 A (LG ENERGY SOLUTION, LTD.) 13 January 2023 (2023-01-13)<br>See paragraphs [0074]-[0077] and figure 7. | 1-14 |

☐ Further documents are listed in the continuation of Box C.        ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 February 2025** | **13 February 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/016675**

| Patent document cited in search report | | | Publication date (day/month/year) | Patent family member(s) | | | Publication date (day/month/year) |
|---|---|---|---|---|---|---|---|
| KR | 10-2022-0121748 | A | 01 September 2022 | CN | 115552703 | A | 30 December 2022 |
| | | | | EP | 4195379 | A1 | 14 June 2023 |
| | | | | JP | 2023-526827 | A | 23 June 2023 |
| | | | | JP | 7512431 | B2 | 08 July 2024 |
| | | | | US | 2023-0170564 | A1 | 01 June 2023 |
| | | | | WO | 2022-182210 | A1 | 01 September 2022 |
| KR | 10-2023-0007955 | A | 13 January 2023 | CN | 116368675 | A | 30 June 2023 |
| | | | | EP | 4231429 | A1 | 23 August 2023 |
| | | | | JP | 2023-551521 | A | 08 December 2023 |
| | | | | KR | 10-2024-0032786 | A | 12 March 2024 |
| | | | | KR | 10-2647342 | B1 | 13 March 2024 |
| | | | | US | 2023-0402704 | A1 | 14 December 2023 |
| | | | | WO | 2023-282631 | A1 | 12 January 2023 |
| KR | 10-2013-0039900 | A | 23 April 2013 | KR | 10-1450951 | B1 | 16 October 2014 |
| KR | 10-2023-0118487 | A | 11 August 2023 | None | | | |
| KR | 10-2023-0007956 | A | 13 January 2023 | CN | 116368674 | A | 30 June 2023 |
| | | | | EP | 4243175 | A1 | 13 September 2023 |
| | | | | JP | 2023-551270 | A | 07 December 2023 |
| | | | | KR | 10-2657917 | B1 | 16 April 2024 |
| | | | | US | 2023-0411769 | A1 | 21 December 2023 |
| | | | | WO | 2023-282632 | A1 | 12 January 2023 |

Form PCT/ISA/210 (patent family annex) (July 2022)